# EUROPEAN PATENT APPLICATION

(11) **EP 4 468 776 A1**
(43) Date of publication of application: **27.11.2024**
(21) Application number: 22920345.0
(22) Date of filing: 17.01.2022
(51) Int. Cl.: H04W 24/10, H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); HARADA, Hiroki, Tokyo 100-6150 (JP); MATSUMURA, Yuki, Tokyo 100-6150 (JP); SHIBAIKE, Naoya, Tokyo 100-6150 (JP); PI, Qiping, Beijing 100190 (CN)
(74) Representative: Hoffmann Eitle
(86) International application number: PCT/JP2022/001470
(87) International publication number: WO 2023/135820

(57) **Abstract**

A terminal according to one aspect of the present disclosure includes: a control section that derives a channel state information (CSI) report, based on a bit output in response to input of input information related to at least part of a particular matrix to an encoder selected from among a plurality of encoders; and a transmitting section that transmits the CSI report. According to one aspect of the present disclosure, it is possible to achieve preferable overhead reduction / channel estimation / resource utilization.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication technologies, it is studied to use artificial intelligence (AI) technologies such as machine learning (ML) for network/device control and management and the like. For example, for future radio communication technologies, it is studied to use AI technologies for improvement of channel state information (Channel State Information Reference Signal (CSI)) feedback, for example, overhead reduction, accuracy improvement, prediction, and the like. Such CSI feedback based on an AI technology may be referred to as AI-aided CSI feedback.

However, studies about concrete contents of AI-aided CSI feedback have not advanced yet. Unless these are appropriately defined, it is not possible to achieve appropriate overhead reduction / accurate channel estimation / highly efficient resource utilization, which may consequently suppress improvement of communication throughput / communication quality.

Thus, an object of the present disclosure is to provide a terminal, a radio communication method, and a base station that can achieve preferable overhead reduction / channel estimation / resource utilization.

### Solution to Problem

A terminal according to one aspect of the present disclosure includes: a control section that derives a channel state information (CSI) report, based on a bit output in response to input of input information related to at least part of a particular matrix to an encoder selected from among a plurality of encoders; and a transmitting section that transmits the CSI report. Advantageous Effects of Invention

According to one aspect of the present disclosure, it is possible to achieve preferable overhead reduction / channel estimation / resource utilization.

### Brief Description of Drawings

[FIG. 1] FIGS. 1A and 1B are diagrams to show an example of flowcharts of generation of a CSI feedback in a case where one or more trained models are configured in advance.
[FIG. 2] FIG. 2 is a diagram to show an example of a flowchart of generation of CSI feedback in a case where a base station trains a model.
[FIG. 3] FIG. 3 is a diagram to show an example of a flowchart of generation of CSI feedback in a case where a UE trains a model.
[FIG. 4] FIG. 4 is a diagram to show an example of CSI feedback using an encoder/decoder in the present disclosure.
[FIG. 5] FIGS. 5A and 5B are diagrams to show examples of input information of Embodiment 2.1.
[FIG. 6] FIGS. 6A and 6B are diagrams to show examples of input information of Embodiment 2.2.
[FIG. 7] FIGS. 7A and 7B are diagrams to show examples of extraction of input information based on DFT bases according to Embodiment 2.3.
[FIG. 8] FIGS. 8A and 8B are diagrams to show examples of a method of specifying DFT bases.
[FIG. 9] FIGS. 9A to 9D are diagrams to show examples of a matrix that can be input information of the second embodiment.
[FIG. 10] FIG. 10 is a diagram to show an example of CSI feedback using an encoder/decoder employing quantization in a third embodiment.
[FIG. 11] FIGS. 11A and B are diagrams to show examples of encoder selection according to Embodiment 4.1.
[FIG. 12] FIG. 12 is a diagram to show an example of encoder selection according to Embodiment 4.3.
[FIG. 13] FIG. 13 is a diagram to show an example of control based on compression rates according to Embodiment 5.1.
[FIG. 14] FIG. 14 is a diagram to show an example of control based on compression rates according to Embodiment 5.2.
[FIG. 15] FIG. 15 is a diagram to show an example of control based on compression rates according to Embodiment 5.3.
[FIG. 16] FIG. 16 is a diagram to show an example of report of a plurality of encoded sequences according to a sixth embodiment.
[FIG. 17] FIG. 17 is a diagram to show an example of report of a plurality of encoded sequences according to an eighth embodiment.
[FIG. 18] FIG. 18 is a diagram to show an example of determination of a CSI-RS for calculation of CSI based on a CSI reference resource in an existing NR specification.
[FIG. 19] FIG. 19A is a diagram to show an example of calculation of CSI instances according to Embodiment 8.1. FIG. 19B is a diagram to show an example of calculation of CSI instances according to Embodiment 8.2.
[FIG. 20] FIG. 20 is a diagram to show an example of a schematic structure of a radio communication system according to one embodiment.
[FIG. 21] FIG. 21 is a diagram to show an example of a structure of a base station according to one embodiment.
[FIG. 22] FIG. 22 is a diagram to show an example of a structure of a user terminal according to one embodiment.
[FIG. 23] FIG. 23 is a diagram to show an example of a hardware structure of the base station and the user terminal according to one embodiment.
[FIG. 24] FIG. 24 is a diagram to show an example of a vehicle according to one embodiment.

### Description of Embodiments

### (Application of Artificial Intelligence (AI) Technologies to Radio Communication)

For future radio communication technologies, it is studied to use AI technologies such as machine learning (ML) for network/device control and management and the like.

For example, for future radio communication technologies, it is studied to use AI technologies for improvement of channel state information (Channel State Information Reference Signal (CSI)) feedback, for example, overhead reduction, accuracy improvement, prediction, and the like. Such CSI feedback based on an AI technology may be referred to as AI-aided CSI feedback.

Channel measurement/estimation may be performed, for example, by using at least one of a channel state information reference signal (CSI-RS), a synchronization signal (SS), a synchronization signal / broadcast channel (Synchronization Signal / Physical Broadcast Channel (SS/PBCH) block, demodulation reference signal (DMRS), a sounding reference signal (SRS), and the like.

Note that existing CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

In AI-aided CSI feedback, it is required to reduce these pieces of information or feed back smaller pieces of information that can replace these pieces of information.

As one method of AI-aided CSI feedback, an autoencoder is studied. However, studies about concrete contents such as what to use as an input to the autoencoder have not advanced yet. Unless these are appropriately defined, it is not possible to achieve appropriate overhead reduction / accurate channel estimation / highly efficient resource utilization, which may consequently suppress improvement of communication throughput / communication quality.

Hence, the inventors of the present invention came up with a preferable control method for AI-aided CSI feedback. Note that each of the embodiments of the present disclosure may be applied to a case where AI/prediction is not used.

In one embodiment of the present disclosure, a terminal (user terminal, User Equipment (UE) / base station (BS)) trains an ML model in a training mode and implements the ML model in a test mode (also referred to as a testing mode, and the like). In the test mode, validation of accuracy of the ML model trained in the training mode (trained ML model) may be performed.

In the present disclosure, a UE/BS may input channel state information, a measured reference signal value, and the like into the ML model and output highly accurate channel state information / measured value / beam selection / position, future channel state information / radio link quality, and the like.

Note that, in the present disclosure, AI may be interpreted as an object (also referred to as a target, object, data, function, program, and the like) having (implementing) at least one of the following features:
- estimation based on observed or collected information,
- selection based on observed or collected information, and
- prediction based on observed or collected information.

In the present disclosure, the body may be, for example, an apparatus such as a terminal or a base station, a device, or the like. The body may correspond to a program included in the apparatus.

In the present disclosure, the ML model may be interpreted as an object having (implementing) at least one of the following features:
- by feeding information, generate an estimation value,
- by feeding information, predict an estimation value,
- by feeding information, discover a feature, and
- by feeding information, select an operation.

In the present disclosure, the ML model may be interpreted as at least one of a model, an AI model, predictive analytics, a predictive analytics model, and the like. The ML model may be derived by using at least one of regression analysis (for example, linear regression analysis, multiple regression analysis, logistic regression analysis), support vector machine, random forest, neural network, deep learning, and the like. In the present disclosure, a model may be interpreted as at least one of an encoder, a decoder, a tool, and the like.

The ML model outputs at least one piece of information from an estimation value, a prediction value, a selected operation, classification, and the like, based on input information.

The ML model may include supervised learning, unsupervised learning, reinforcement learning, and the like. Supervised learning may be used to learn a general rule for mapping an input to an output. Unsupervised learning may be used to learn a feature of data. Reinforcement learning may be used to learn an operation for maximizing a goal.

Each embodiment to be described later will be described by assuming a case where supervised learning is used for an ML model, but this is not restrictive.

In the present disclosure, implementation, management, operation, performance, and the like may be interchangeably interpreted. In the present disclosure, test, after-training, production use, actual use, and the like may be interchangeably interpreted. A signal may be interpreted as a signal/channel, and vice versa.

In the present disclosure, the training mode may correspond to a mode in which the UE/BS transmits/receives a signal for the ML model (in other words, an operation mode in a training period). In the present disclosure, the test mode may correspond to a mode in which the UE/BS implements the ML model (for example, implements a trained ML model to predict an output) (in other words, an operation mode in a test period).

In the present disclosure, the training mode may mean a mode of transmitting, for a particular signal to be transmitted in the test mode, the particular signal with large overhead (for example, a large resource amount).

In the present disclosure, the training mode may mean a mode of referring to a first configuration (for example, a first DMRS configuration, a first CSI-RS configuration). In the present disclosure, the test mode may mean a mode of referring to a second configuration (for example, a second DMRS configuration, a second CSI-RS configuration) different from the first configuration. For the first configuration, at least one of more time resources, frequency resources, code resources, and ports (antenna ports) related to measurement than those for the second configuration may be configured.

Embodiments according to the present disclosure will be described in detail with reference to the drawings as follows. The radio communication methods according to respective embodiments may each be employed individually, or may be employed in combination.

In the embodiments below, related subjects are the UE and the BS for describing an ML model related to UE-BS communication, but application of each of the embodiments of the present disclosure is not limited to this. For example, for communication between other subjects (for example, UE-UE communication), the UE and the BS in the embodiments below may be interpreted as a first UE and a second UE. In other words, each of the UE, the BS, and the like in the present disclosure may be interpreted as any UE/BS.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), and the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, Physical Uplink Control Channel (PUCCH) group, PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, a quasi-co-location (QCL), QCL assumption, and the like may be interchangeably interpreted.

In the present disclosure, a CSI-RS, a non-zero power (Non Zero Power (NZP)) CSI-RS, a zero power (ZP) CSI-RS, and CSI interference measurement (CSI-IM) may be interchangeably interpreted. A CSI-RS may include other reference signals.

In the present disclosure, a measured/reported RS may mean an RS measured/reported for CSI report.

In the present disclosure, timing, a time point, time, a slot, a sub-slot, a symbol, a subframe, and the like may be interchangeably interpreted.

In the present disclosure, a direction, an axis, a dimension, a domain, polarization, a polarized element, and the like may be interchangeably interpreted.

In the present disclosure, an RS may be, for example, a CSI-RS, an SS/PBCH block (SS block (SSB)), or the like. An RS index may be a CSI-RS resource indicator (CRI), an SS/PBCH block resource indicator (SSBRI), or the like.

In the present disclosure, estimation, prediction, and inference may be interchangeably interpreted. In the present disclosure, estimate, predict, and infer may be interchangeably interpreted.

In the present disclosure, an autoencoder, an encoder, a decoder, and the like may be interpreted as at least one of a model, an ML model, a neural network model, an AI model, an AI algorithm, and the like. An autoencoder may be interpreted as any autoencoder such as a stack autoencoder and a convolutional autoencoder, and vice versa. The encoder/decoder of the present disclosure may employ a model such as Residual Network (ResNet), DenseNet, or RefineNet.

In the present disclosure, an encoder, encoding, encode, modification/change/control by an encoder, and the like may be interchangeably interpreted. In the present disclosure, a decoder, decoding, decode, modification/change/control by a decoder, and the like may be interchangeably interpreted.

In the present disclosure, UCI, a CSI report, CSI feedback, feedback information, a feedback bit, and the like may be interchangeably interpreted. In the present disclosure, a bit, a bit string, a bit sequence, a sequence, a value, information, a value obtained from a bit, information obtained from a bit, and the like may be interchangeably interpreted.

In the present disclosure, a layer (for an encoder) may be interpreted as a layer used in an AI model (input layer, intermediate layer, and the like), and vice versa. A layer of the present disclosure may correspond to at least one of an input layer, an intermediate layer, an output layer, a batch normalization layer, a convolutional layer, a dropout layer, a fully connected layer, and the like.

In the present disclosure, a layer for a precoding matrix may be interpreted as a Multi Input Multi Output (MIMO) layer, a stream, and the like, and vice versa.

### (Radio Communication Method)

### <First Embodiment>

A first embodiment relates to CSI feedback based on an encoder/decoder (model) of the present disclosure.

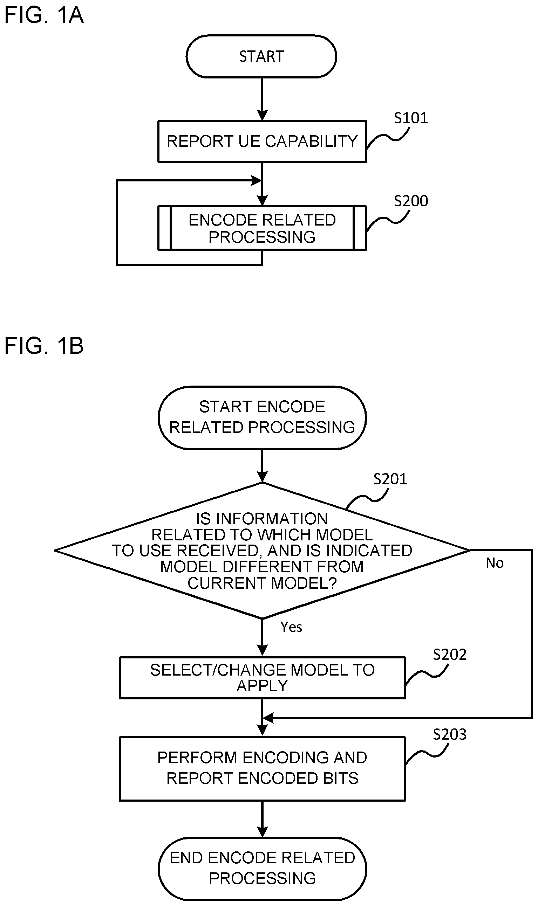

FIGS. 1A and 1B are diagrams to show an example of flowcharts of generation of a CSI feedback in a case where one or more trained models are configured in advance.

In step S101, a UE reports capability of whether to support inference based on a model, for generation of a CSI feedback. The UE may report the capability, for example, at the time of or after initial access/handover, or may report the capability in response to an inquiry message about the capability (for example, an RRC message) from a base station.

The UE may transmit, as the capability, information related to the kind/type of a supported model (for example, linear regression, a neural network, an autoencoder, or the like).

Then, in step S200, the UE performs encode related processing. FIG. 1B shows an example of a flowchart of the encode related processing in step S200.

In the encode related processing, in step S201, the UE determines whether to receive information related to which model to use, and determines, in a case of determining to receive the information, whether the indicated model is different from the current model (model used for generation of a CSI feedback).

Note that, when the UE has not received the information related to which model to use, the UE may determine any of one or more trained models as the current model.

In a case of Yes in step S201, the UE selects/changes the model to use for the generation of a CSI feedback as/to the model indicated by the received information, in step S202.

After step S202, or in a case of No in step S201, the UE performs encoding by using the model to use for the generation of a CSI feedback to report encoded bits to a network (for example, the base station), in step S203.

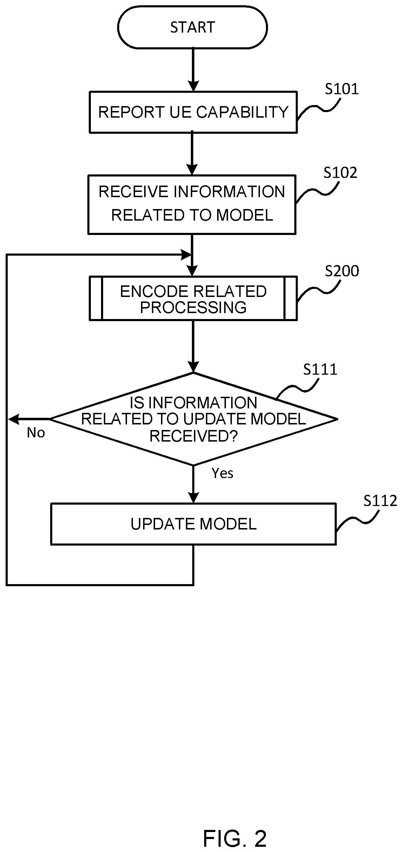

FIG. 2 is a diagram to show an example of a flowchart of generation of CSI feedback in a case where the base station trains a model. Note that operations in steps denoted by the same reference signs as those of the already described steps may be the same as those of the already described steps, and hence detailed description will not be repeated.

In step S102, the UE receives information related to a model from the base station. Reception of information related to a model may be referred to as transfer of a model. Note that, in the present disclosure, transfer may be referred to as notification, report, configuration, communication, transmission, and the like, and vice versa.

The information related to a model may indicate an appropriate model determined by the network (for example, the base station) and may include at least one of pieces of information such as a model ID, a model function, an input/output of the model, and application range (for example, an applicable cell(s)), for example.

Note that, in step S203 included in step S200 of the encode related processing in FIG. 2, not only the encoded bits but also information related to model performance may be reported.

In step Sill, the UE determines whether the UE has received information related to an update model. In a case of Yes in step Sill, the UE updates the model.

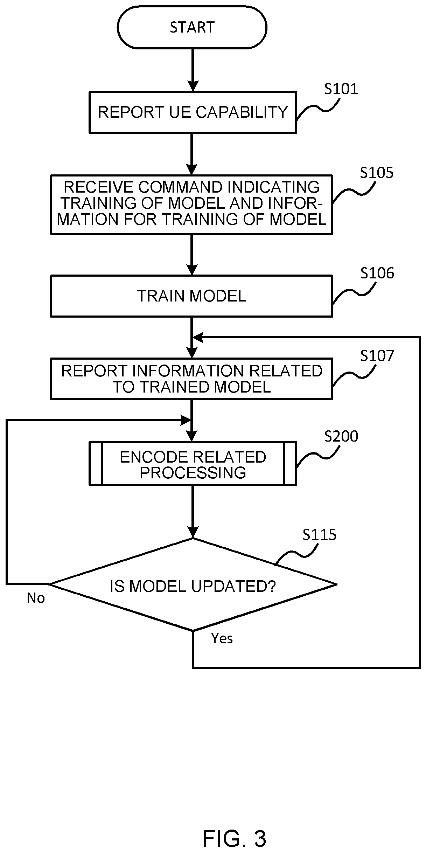

FIG. 3 is a diagram to show an example of a flowchart of generation of CSI feedback in a case where the UE trains a model. Note that operations in steps denoted by the same reference signs as those of the already described steps may be the same as those of the already described steps, and hence detailed description will not be repeated.

In step S105, the UE receives a command to indicate training of a model and information for the training of the model from the base station. In step S106, the UE switches to the training mode, based on the command to indicate the training of the model and carries out the training of the model, based on the information for the training of the model.

In step S107, the UE reports information related to a trained model. Note that information related to model performance may also be reported.

The UE may update the model at the time of (or after) the encode related processing in FIG. 3. For example, the UE may perform training/fine-tuning of a used model.

In step S115, the UE determines whether the UE has updated the model. In a case of Yes in step S115, the UE reports the information related to the trained model (which may include information related to the training/fine-tuning) in step S107.

Note that transmission/reception of the information indicated in each of the flowcharts in the first embodiment may be performed by using physical layer signaling (for example, DCI or UCI), higher layer signaling (for example, RRC signaling or a MAC CE), or a particular signal/channel, or a combination of these.

Note that processing on the base station side corresponding to each of the flowcharts in the first embodiments (decode related processing) can be understood by a person skilled in the art as reflection of the encode related processing. By inputting the encoded bits transmitted from the UE, into a model of a decoder corresponding to the encoder used by the UE, the base station can estimate CSI information before the encoding. This will also be described in a second embodiment.

According to the first embodiment described above, control based on a model can be appropriately performed.

### <Second Embodiment>

The second embodiment relates to information fed (provided) to the encoder by the UE for CSI feedback. The information may be referred to as information input to the encoder or simply as input information and the like.

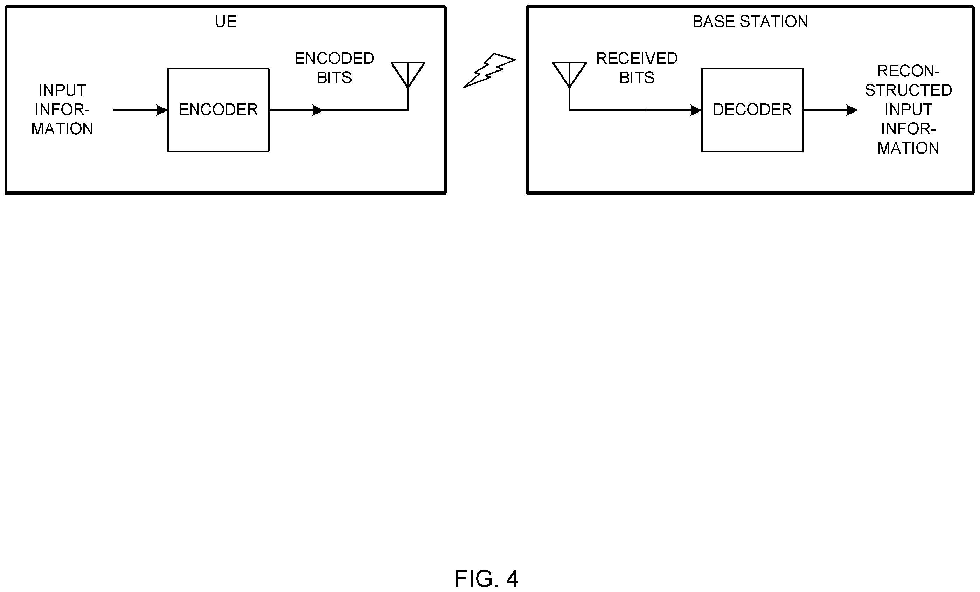

FIG. 4 is a diagram to show an example of CSI feedback using the encoder/decoder in the present disclosure. The UE transmits information (CSI feedback) including encoded bits output in response to input of input information to the encoder, from the antenna. The base station obtains reconstructed input information output in response to input of the bit of the CSI feedback received at the corresponding decoder.

### {Embodiment 2.1}

The input information may be information related to a channel (or a channel matrix). The channel matrix may include information of channel coefficients for each subband / antenna port (for simplicity, referred to as a matrix of Embodiment 2.1.1) or may include information obtained by the channel coefficients being subjected to inverse discrete Fourier transform (IDFT) (for simplicity, referred to as a matrix of Embodiment 2.1.2). The latter information can make, by transforming the channel matrix into the angular/delay domain, the matrix sparser than that of the former information, which can contribute to speeding-up of computation by the encoder and the like.

When an output from the decoder is information subjected to IDFT, the base station can acquire, by subjecting the information to DFT, original channel coefficients.

Note that, in the present disclosure, an antenna port may be interpreted as at least one of a transmitter (BS) antenna port, a receiver (UE) antenna port, a transmission antenna port, a reception antenna port, and the like. In the present disclosure, a subband may be interpreted as a CSI subband, and vice versa.

In a case of employing Embodiment 2.1, the UE can acquire input information by acquiring channel coefficients, based on a reference signal and the like and hence need not calculate a precoding matrix, which can reduce UE load.

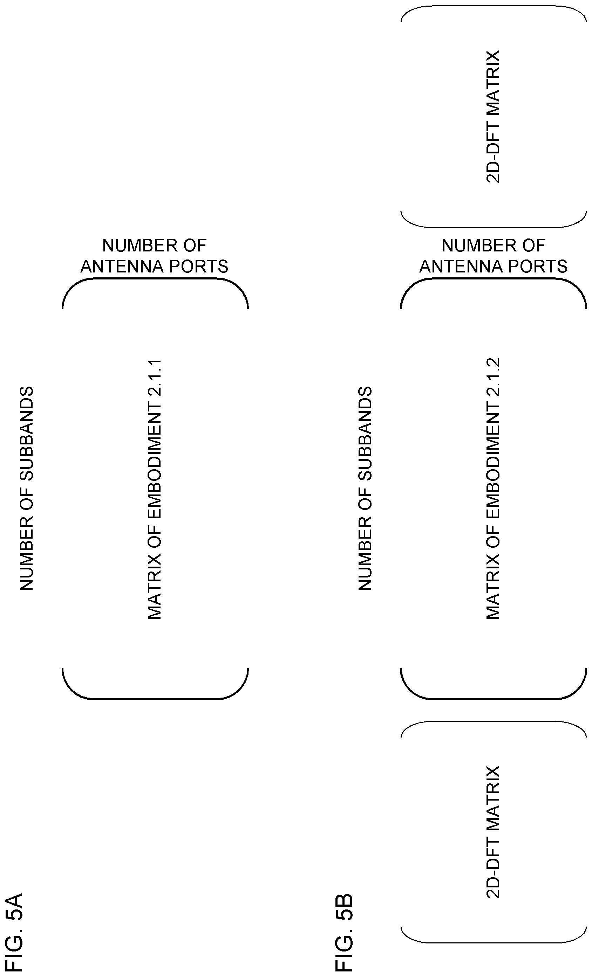

FIGS. 5A and 5B are diagrams to show examples of input information of Embodiment 2.1. In the present example, a single-antenna UE is assumed. FIG. 5A shows the matrix of Embodiment 2.1.1 and corresponds, for example, to a channel matrix of the number of antenna ports x the number of subbands. Each of elements may indicate a channel coefficient. FIG. 5B shows a matrix equivalent to that in FIG. 5A. Here, a matrix sandwiched between two-dimensional DFT (2D-DFT) matrices indicates the matrix of Embodiment 2.1.2 and corresponds, for example, to a channel matrix of the number of antenna ports x the number of subbands.

### {Embodiment 2.2}

The input information may be information related to a precoding matrix. The precoding matrix may include information of precoding coefficients (elements of the precoding matrix) for each subband / antenna port / MIMO layer (for simplicity, referred to as a matrix of Embodiment 2.2.1) or may include information obtained by the precoding coefficients being subjected to IDFT (for simplicity, referred to as a matrix of Embodiment 2.2.2). The latter information can make, by transforming the precoding matrix into the angular/delay domain, the matrix sparser than that of the former information, which can contribute to speeding-up of computation by the encoder and the like.

When an output from the decoder is information subjected to IDFT, the base station can acquire, by subjecting the information to DFT, original channel coefficients.

In a case of employing Embodiment 2.2, the UE calculates a precoding matrix, which can improve compatibility with existing specifications for performing control based on a precoding matrix.

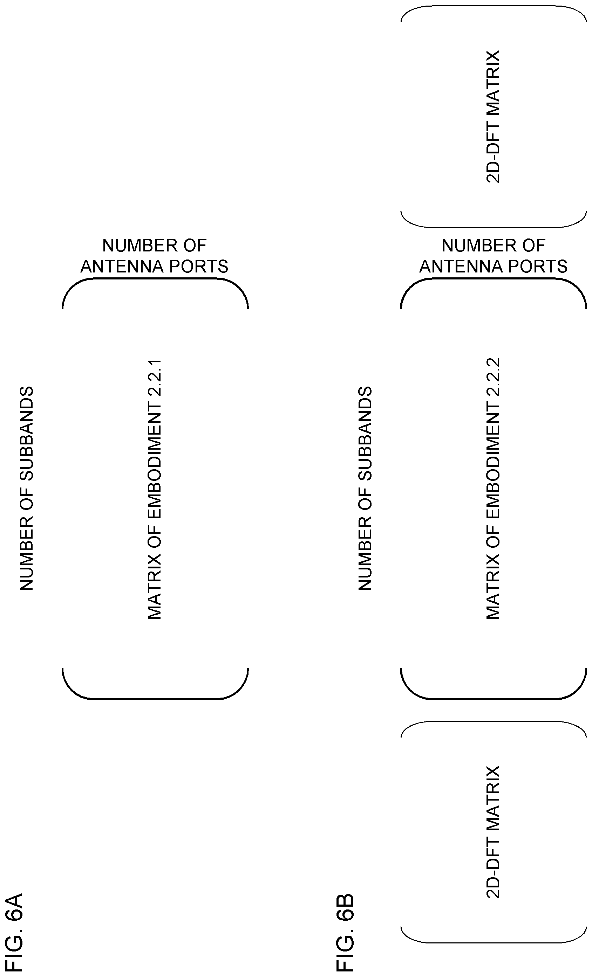

FIGS. 6A and 6B are diagrams to show examples of input information of Embodiment 2.2. In the present example, precoding matrices each being for each MIMO layer are shown. FIG. 6A shows the matrix of Embodiment 2.2.1 and corresponds, for example, to a precoding matrix of the number of antenna ports x the number of subbands. Each of elements may indicate a weight (coefficient) of precoding. FIG. 6B shows a matrix equivalent to that in FIG. 6A. Here, a matrix sandwiched between two-dimensional DFT (2D-DFT) matrices indicates the matrix of Embodiment 2.2.2 and corresponds, for example, to a precoding matrix of the number of antenna ports x the number of subbands.

Note that the UE may determine which information between Embodiments 2.1 and 2.2 to use as input information, based on a particular rule / UE capability, or may be notified of this by using physical layer signaling (for example, DCI), higher layer signaling (for example, RRC signaling or a MAC CE), or a particular signal/channel, or a combination of these.

### {Embodiment 2.3}

Embodiment 2.3 relates to how the UE acquires (extracts) input information. This extraction may be performed for each DFT base. For example, only information corresponding to a particular DFT base may be extracted as input information. In this case, the DFT base may correspond to a vector that can be calculated based on at least one of the same DFT component (or the same DFT coefficient / DFT index) and an oversampling factor and may correspond to a column/row of the above-described channel matrix / precoding matrix. For example, one DFT base may correspond to one vector (one column vector or row vector) in a 2D DFT matrix.

One DFT base may be one vector including a component of an expression (for example, expression 1 below) corresponding to a parameter such as a DFT index / oversampling factor.

### (Expression 1) e^{j (2π*(DFT index) * (sampling point)/((number of samples) * (over sampling factor)))}

Here, a DFT index may be an index for identifying a DFT base, and a sampling point may be an index indicating a particular sample and may take a value from among 0, 1, ..., (number of samples) * (over sampling factor) - 1. The DFT index may be referred to as a DFT base index and the like. The DFT index may correspond to a column number / row number of the channel matrix / precoding matrix.

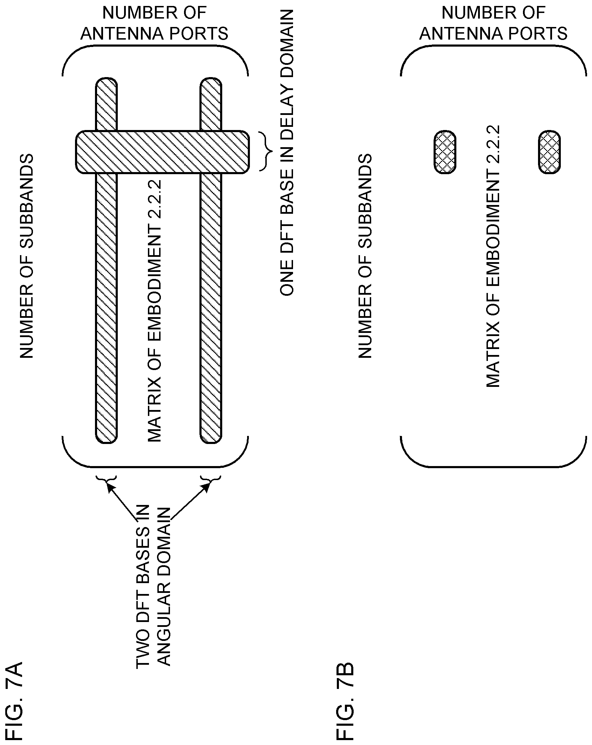

FIGS. 7A and 7B are diagrams to show examples of extraction of input information based on DFT bases according to Embodiment 2.3. In the present example, examples of expression of input information from the precoding matrix of Embodiment 2.2.2 are shown. FIG. 7A is a diagram to show selected DFT bases. FIG. 7A shows a case where two DFT bases are selected for columns (angular domain, antenna port domain), and one DFT base is selected for rows (delay domain, subband domain).

The input information may correspond to each element where a column-direction DFT base and a row-direction DFT base intersect, and elements corresponding to hatching parts shown in FIG. 7B may be determined as pieces of input information for FIG. 7A.

The UE may transmit information related to DFT bases to the network. The UE may transmit the information by including the information in a CSI report or may transmit the information separately from a CSI report. The information related to DFT bases may be information related to how many DFT bases are selected (reported) in a particular CSI report / CSI part 1 / CSI part 2 / CSI part X or may be information related to which DFT bases are selected (reported) in a particular CSI report / CSI part 1 / CSI part 2 / CSI part X (information for identifying DFT bases).

Note that, in the present disclosure, CSI part X may mean a CSI part newly defined other than CSI part 1/2. Information corresponding to an output from the encoder described in the present disclosure may be included in CSI part 1/2/X.

The UE may transmit information related to how many DFT bases are selected (reported) in a particular CSI part (for example, CSI part 1) to the network. The UE may transmit information related to how many DFT bases are selected (reported) in a CSI report (given CSI part in the CSI report (for example, CSI part 2) by using another CSI part (for example, CSI part 1).

The UE may determine the number of elements to extract (for example, DFT bases corresponding to elements to extract) / elements to extract (for example, DFT bases corresponding to elements to extract), based on a particular rule or based on received information related to DFT bases.

The UE may be notified of the information related to DFT bases transmitted from / received by the UE, by using physical layer signaling (for example, DCI or UCI), higher layer signaling (for example, RRC signaling or a MAC CE), or a particular signal/channel, or a combination of these, or the information may be UE capability.

The information related to DFT bases may indicate a start position of the selected DFT bases and the number of DFT bases. This information can have relatively small capacity.

The information related to DFT bases may indicate the indices of the respective selected DFT bases. With this information, more flexible DFT bases can be used.

These pieces of information related to DFT bases may be used in combination. The UE may determine which information related to DFT bases to use, based on a particular rule / UE capability, or may be notified of this by using physical layer signaling (for example, DCI), higher layer signaling (for example, RRC signaling or a MAC CE), or a particular signal/channel, or a combination of these. For example, which information related to DFT bases to use may be selected based on at least one of the number of candidate DFT bases, other parameters, and the like.

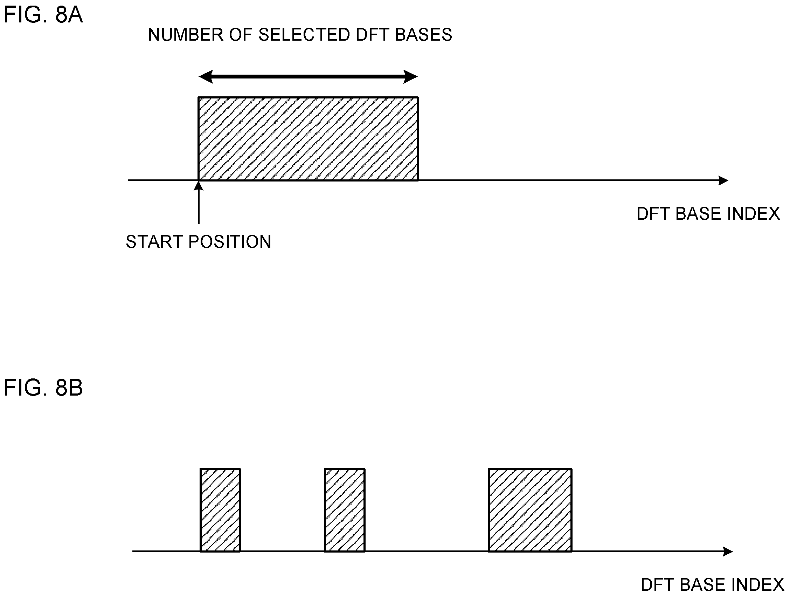

FIGS. 8A and 8B are diagrams to show examples of a method of specifying DFT bases. FIG. 8A shows an example of DFT bases indicated, when the information related to DFT bases indicates the start position of selected DFT bases and the number of selected DFT bases, by the information. FIG. 8B shows an example of DFT bases indicated, when the information related to DFT bases indicates the indices of respective selected DFT bases, by the information. In a case of the specifying method in FIG. 8B, selected DFT bases may be discontiguous as shown.

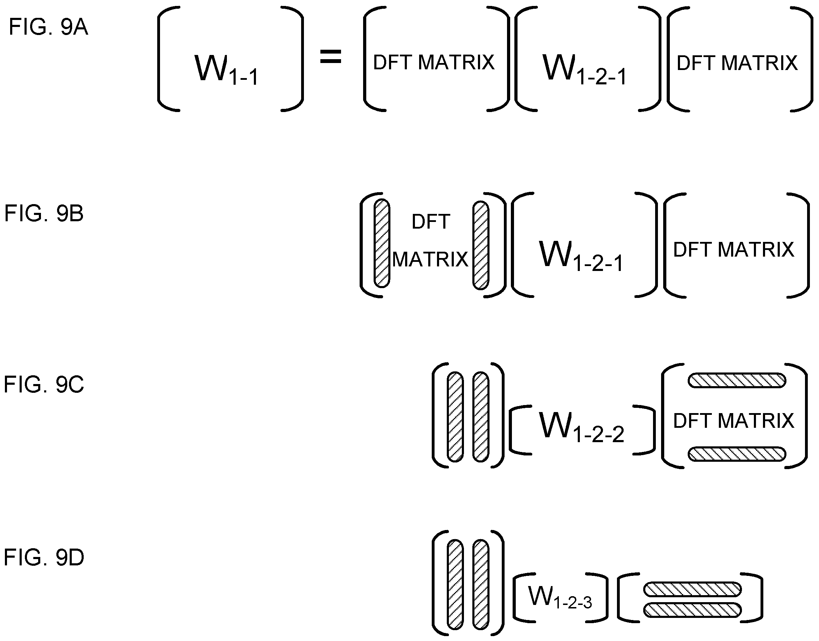

FIGS. 9A to 9D are diagrams to show examples of a matrix that can be input information of the second embodiment. In the present example, description will be given by assuming the precoding matrix of Embodiment 2.2, but it is understood by a person skilled in the art that description may similarly applicable to Embodiment 2.1. In the present example, W₁₋₁ may mean a matrix obtained without any additional processing (preprocessing) in addition to acquisition of an existing precoding matrix, and W₁₋₂₋₁, W₁₋₂₋₂, and W₁₋₂₋₃ may each mean a matrix obtained with additional processing (preprocessing) in addition to acquisition of an existing precoding matrix.

The left-hand side W₁₋₁ in FIG. 9A corresponds to the matrix of Embodiment 2.2.1, and the right-hand side W₁₋₂₋₁ corresponds to the matrix of Embodiment 2.2.1. The size of each of these matrices is equal to the number of subbands x the number of antenna ports, and these matrices may be acquired for each layer.

W₁₋₂₋₂ in FIG. 9C corresponds to a matrix (close to type II codebook) obtained by extracting (in other words, beam-selecting) information corresponding to some DFT bases (two DFT bases shown in the DFT matrix on the left side in FIG. 9B in the present example) in the angular domain from W₁₋₂₋₁. The size of W₁₋₂₋₂ is equal to the number of subbands x the number of selected beams (number of angles), and this matrix may be acquired for each layer.

W₁₋₂₋₃ in FIG. 9D corresponds to a matrix (close to enhancement type II codebook) obtained by further extracting (in other words, delay-extracting) information corresponding to some DFT bases (two DFT bases shown in the DFT matrix on the right side in FIG. 9C in the present example) in the delay domain from W₁₋₂₋₂. The size of W₁₋₂₋₃ is equal to the number of selected delays x the number of selected beams (number of angles), and this matrix may be acquired for each layer.

According to the second embodiment described above, input information to the encoder can be appropriately controlled.

### <Third Embodiment>

A third embodiment relates to quantization for CSI feedback. By employing quantization, learning using backpropagation can be applied.

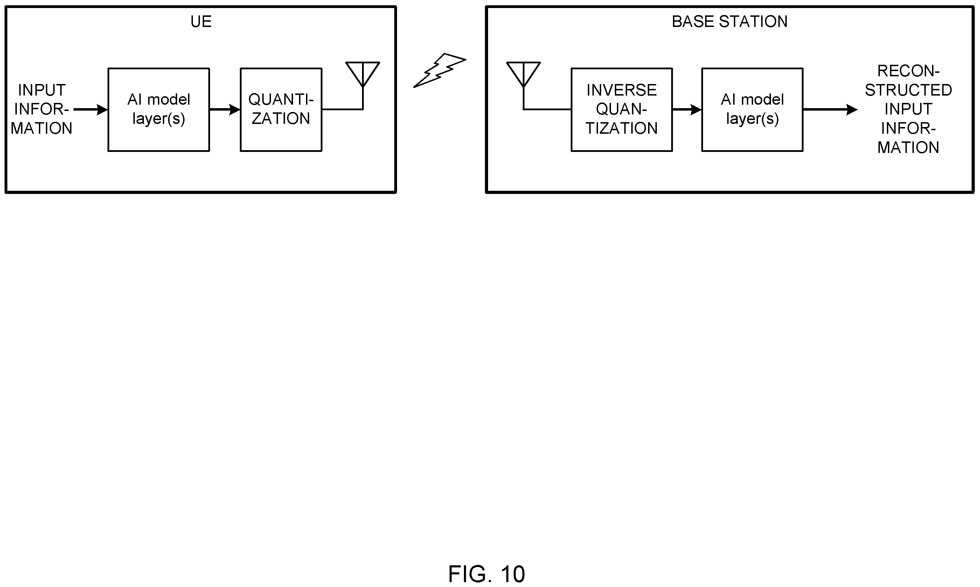

FIG. 10 is a diagram to show an example of CSI feedback using an encoder/decoder employing quantization in the third embodiment. The UE performs particular quantization in encoding or on an encoded value/bit and transmits information including a bit after the quantization (CSI feedback) from the antenna. Note that, in the drawings of the present and subsequent examples, "AI model layer(s)" may mean an encoder/decoder implemented with one or more layers.

The base station performs corresponding inverse quantization on the bit in the received CSI feedback and obtains reconstructed input information output in response to input of the value/bit after the inverse quantization to a corresponding decoder.

### {Embodiment 3.1}

The particular quantization may be uniform quantization. Uniform quantization corresponds to quantization with a quantization step width being the same (uniform) irrespective of a value to be quantized (or quantization index) and may be referred to as linear quantization.

For example, a value after the quantization may be obtained by round(2^{B - 1} * x)/2^{B - 1} (value after quantization = round (2^{B - 1} * x)/2^{B - 1}). Here, round (A) denotes a function that rounds off A, and x may denote an input value, 2^{B - 1} may denote quantization level, and B may denote the number of quantized bits. Note that round(A) may be interpreted as a ceil function of A, a floor function of A, and the like.

The UE may determine a quantization level / sampling interval, based on a particular rule / UE capability, or may be notified of this by using physical layer signaling (for example, DCI), higher layer signaling (for example, RRC signaling or a MAC CE), or a particular signal/channel, or a combination of these.

The UE may report the determined quantization level / sampling interval by using physical layer signaling (for example, UCI), higher layer signaling (for example, RRC signaling or a MAC CE), or a particular signal/channel, or a combination of these. For example, the UE may report information related to the determined quantization level / sampling interval by using CSI part 1 of a CSI report.

### {Embodiment 3.2}

The particular quantization may be non-uniform quantization. Non-uniform quantization corresponds to quantization with a quantization step width changing (non-uniform) depending on a value to be quantized (or quantization index) and may be referred to as non-linear quantization.

For example, a value after the quantization may be obtained by using a-law coding / µ-law coding (algorithm) of an input value x. These kinds of coding are effective when a small value is frequently generated compared with a large value.

The UE may determine a parameter for determining a non-linear quantization function, based on a particular rule / UE capability, or may be notified of this by using physical layer signaling (for example, DCI), higher layer signaling (for example, RRC signaling or a MAC CE), or a particular signal/channel, or a combination of these.

The UE may report the determined parameter for determining a non-linear quantization function by using physical layer signaling (for example, UCI), higher layer signaling (for example, RRC signaling or a MAC CE), or a particular signal/channel, or a combination of these. For example, the UE may report information related to the determined parameter for determining a non-linear quantization function by using CSI part 1 of a CSI report.

The UE may determine a quantization level / sampling interval, based on a particular rule / UE capability, or may be notified of this by using physical layer signaling (for example, DCI), higher layer signaling (for example, RRC signaling or a MAC CE), or a particular signal/channel, or a combination of these.

The UE may report the determined quantization level / sampling interval by using physical layer signaling (for example, UCI), higher layer signaling (for example, RRC signaling or a MAC CE), or a particular signal/channel, or a combination of these. For example, the UE may report information related to the determined quantization level / sampling interval by using CSI part 1 of a CSI report.

Note that the UE may determine according to which one of Embodiments 3.1 and 3.2 the UE is to perform control related to quantization (perform quantization or not), based on a particular rule / UE capability, or may be notified of this by using physical layer signaling (for example, DCI), higher layer signaling (for example, RRC signaling or a MAC CE), or a particular signal/channel, or a combination of these.

According to the third embodiment described above, quantization to an output bit of the encoder can be appropriately controlled.

### <Fourth Embodiment>

A fourth embodiment relates to selection of an encoder for CSI feedback.

### {Embodiment 4.1}

The UE may determine which encoder to use, based on information notified by using physical layer signaling (for example, DCI), higher layer signaling (for example, RRC signaling or a MAC CE), or a particular signal/channel, or a combination of these.

For example, the UE may be configured with a plurality of encoders by higher layer signaling and may determine an encoder to use among the plurality of encoders, based on an index specified by a MAC CE / DCI (which may, for example, be referred to as an encoder index).

The UE may determine an encoder to use, based on different information explicitly or implicitly notified by the BS (for example, information related to target accuracy, target compression rate, and the like of each encoder (to be described later)).

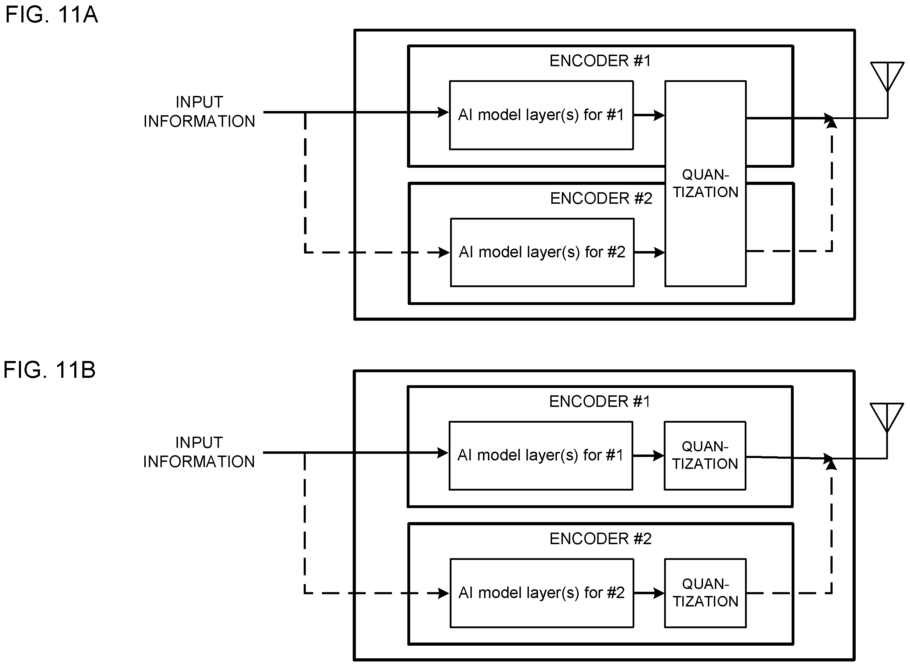

FIGS. 11A and B are diagrams to show examples of encoder selection according to Embodiment 4.1. The present example shows a case where two encoders (encoders #1 and #2) are available for the UE and the UE is notified of use of encoder #1 by the base station. In this case, the UE may input input information to encoder #1, perform particular quantization on an encoded value/bit, and transmit information including a bit after the quantization (CSI feedback) from the antenna. At this event, the UE may perform common quantization irrespective of the selected encoder (common to all the encoders) (FIG. 11A) or may perform separate (different or independent) quantization for each encoder (or each set of encoders) (FIG. 11B). Note that the set of encoders may mean a group of one or a plurality of encoders.

Note that quantization in one encoder and quantization in another encoder being different from each other may mean that at least part of parameters (for example, uniform quantization or not, quantization level, sampling interval, and the like) are different between these cases of quantization.

The UE may determine quantization corresponding to a given encoder (or set of encoders), to which set of encoders the encoder belongs, and the like, based on a particular rule / UE capability, or may be notified of this by using physical layer signaling (for example, DCI), higher layer signaling (for example, RRC signaling or a MAC CE), or a particular signal/channel, or a combination of these. Regarding to which encoder the encoder belongs, for example, the index of a corresponding set of encoders may be included in configuration information of the encoder, or the configuration information of each set of encoders may include the indices of the encoders belonging to the set.

The UE may perform quantization in a different method only on a particular encoder. For example, non-uniform quantization may be performed when a parameter for determining a non-linear quantization function is configured for the particular encoder while uniform quantization may be performed when the parameter is not configured. In this case, the UE may employ common quantization for the encoders other than the particular encoder or may employ, for an encoder(s) configured with different quantization, the quantization based on the configuration.

Note that, in the present disclosure, each encoder may include but need not necessarily include a quantization processing section (the quantization processing section may be present independently of the encoder). Note that an example where different quantization is employed for each encoder as in FIG. 11B is shown in the subsequent drawings, but this is not restrictive.

### {Embodiment 4.2}

The UE may determine which encoder to use, based on a particular rule.

For example, the UE may determine an encoder, based on at least one of the following:
- target accuracy of each encoder,
- target compression rate of each encoder,
- information related to delay/angle of multi-path,
- the number of detected paths, and
- information related to Line Of Site (LOS) / Non-Line Of Site (NLOS).

In the present disclosure, accuracy / compression rate may be interpreted as performance. Target performance and performance may be interchangeably interpreted. A path/delay/angle may mean a path/delay/angle between the UE and the base station. LOS may mean that the UE and the base station are in an environment with clear views of each other (or with no shield), and NLOS may mean that the UE and the base station are not in an environment with clear views of each other (with shield). The above-described information for determining an encoder (for example, path/delay/angle, LOS/NLOS, or the like) may be indicated by an index (for example, an LOS/NLOS indicator).

The UE may determine which information to use to determine an encoder, based on a particular rule / UE capability, or may be notified of this by using physical layer signaling (for example, DCI), higher layer signaling (for example, RRC signaling or a MAC CE), or a particular signal/channel, or a combination of these.

The metrics may be expressed by information (for example, a parameter) received via at least one of physical layer signaling (for example, DCI) and higher layer signaling (for example, RRC signaling, a MAC CE).

The UE may select an encoder only from among candidate encoders. The UE may be configured with a plurality of encoders by at least one of physical layer signaling (for example, DCI) and higher layer signaling (for example, RRC signaling, a MAC CE).

The UE may report information related to the selected encoder (for example, an encoder index) by using physical layer signaling (for example, UCI), higher layer signaling (for example, RRC signaling or a MAC CE), or a particular signal/channel, or a combination of these. For example, the UE may report the information related to the selected encoder by using CSI part 1 of a CSI report.

An example of the encoder selection according to Embodiment 4.2 can be described by using FIG. 11. The present example shows a case where two encoders (encoders #1 and #2) are available for the UE and the UE determines to use encoder #1. In this case, the UE may input input information to encoder #1, perform particular quantization on an encoded value/bit, and transmit information including a bit after the quantization (CSI feedback) from the antenna.

### {Embodiment 4.3}

When the UE determines not to use any encoder, the UE may perform existing PMI report (for example, fall back to calculation/report of a PMI defined in Rel-16 NR).

The UE may determine not to use any encoder, based on a particular rule / UE capability, or may be notified that the UE does not use any encoder, by using physical layer signaling (for example, DCI), higher layer signaling (for example, RRC signaling or a MAC CE), or a particular signal/channel, or a combination of these.

For example, when the UE receives a particular indication (for example, information disabling/deactivating use of an encoder) by a MAC CE / DCI, the UE may fall back to report of a PMI.

When estimated performance (for example, accuracy, compression rate) cannot achieve target performance by using any encoder, the UE may fall back to report of a PMI.

The UE may be configured with a codebook type to be used for fallback of report of a PMI, by using at least one of physical layer signaling (for example, DCI) and higher layer signaling (for example, RRC signaling, a MAC CE). This codebook type may be referred to as a default codebook type.

The UE may report that the UE does not use any encoder (falls back to report of a PMI), by using physical layer signaling (for example, UCI), higher layer signaling (for example, RRC signaling or a MAC CE), or a particular signal/channel, or a combination of these. For example, the UE may report the information related that the UE does not use any encoder (falls back to report of a PMI) by using CSI part 1 of a CSI report.

Note that fallback to report of a PMI may be performed at at least one timing of the following:
- timing of receiving a particular indication (for example, information enabling/activating use of an encoder),
- timing of expiry of a particular timer (for example, a timer started at the time of initiation of fallback),
- timing of satisfying a particular condition (for example, at which estimated performance is estimated to achieve target performance), and
- timing using at least one timing of the above as a reference (for example, timing at which an offset is added).

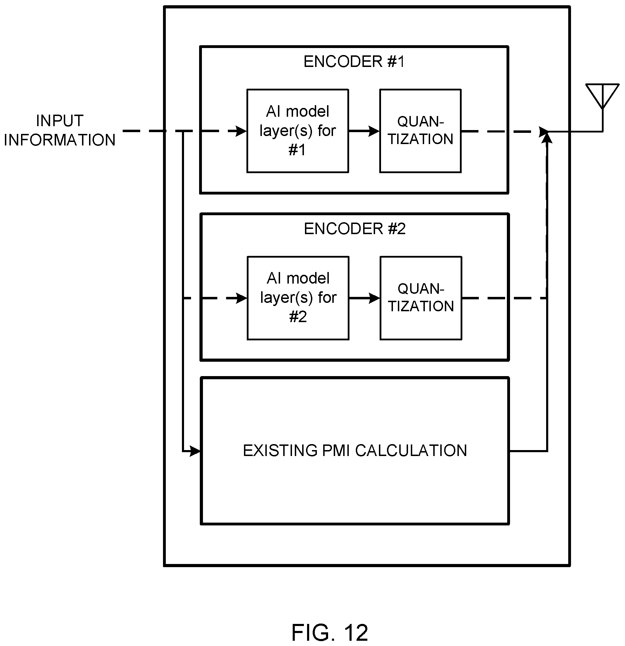

FIG. 12 is a diagram to show an example of the encoder selection according to Embodiment 4.3. The present example shows a case where the UE is notified that two encoders (encoders #1 and #2) are available and notified of use of encoder #1 by the base station but target performance is not achievable by the use of encoder #1. In this case, the UE may perform existing PMI calculation by using input information (above-described W₁₋₁ with no necessity of preprocessing is preferable from the viewpoint of UE load) and transmit information indicating the PMI (CSI feedback) from the antenna.

Note that the CSI feedback of Embodiment 4.3 may correspond to information reported as an existing PMI or may corresponding to information other than this. The CSI feedback of Embodiment 4.3 may be referred to as fallback CSI feedback, default CSI feedback, and the like. The CSI feedback may be calculated in a method different from that for existing PMI calculation. For example, at least one of above-described W₁₋₂₋₂ close to type II codebook, W₁₋₂₋₃ close to enhanced type II codebook, and the like may be reported. Note that CSI feedback of Embodiment 4.3 may include input information as it is. For example, when input information is W₁₋₂₋₂/W₁₋₂₋₃, CSI feedback of Embodiment 4.3 may include W₁₋₂₋₂/W₁₋₂₋₃ without additional calculation.

According to the fourth embodiment described above, selection/fallback of an encoder can be appropriately controlled.

### <Fifth Embodiment>

A fifth embodiment relates to a compression rate (CR) for CSI feedback. In the present disclosure, the UE may support a plurality of compression rates.

In the present disclosure, a compression rate may be information related to the length of encoded bits (bit size output from an encoder in response to a particular input) and may, for example, be a rate of encoded bits to an input of an encoder (payload rate). Description will be given by assuming that the compression rate of the present disclosure is the rate of encoded bits to an input of an encoder. In this case, it is to be noted that a compression rate being high/low mean opposite to a compression rate being high/low in general. In the present disclosure, a compression rate being higher may mean the size of an output of an encoder being closer to the size of an input.

The UE may determine what to report as CSI feedback, based on a compression rate. In other words, the UE may adjust encoded bits based on the compression. This will be described later in Embodiments 5.1 to 5.3.

The UE may determine a compression rate to use, based on information (for example, indices indicating compression rates) notified by using physical layer signaling (for example, DCI), higher layer signaling (for example, RRC signaling or a MAC CE), or a particular signal/channel, or a combination of these. Correspondence (mapping) between the indices and compression rates may be determined based on a particular rule, or the UE may be notified of this by using physical layer signaling (for example, DCI), higher layer signaling (for example, RRC signaling or a MAC CE), or a particular signal/channel, or a combination of these.

The UE may report information related to the compression rate to use (for example, an encoder index) by using physical layer signaling (for example, UCI), higher layer signaling (for example, RRC signaling or a MAC CE), or a particular signal/channel, or a combination of these. For example, the UE may report the information related to the compression rate to use, by using CSI part 1 of a CSI report.

For example, the UE may determine a compression rate to use, based on at least one of the following:
- estimated channel accuracy after decoding (for example, this can be estimated based on generalized cosine similarity (GCS)) and
- resource to be used for transmission of CSI feedback (or bit size possible for transmission in the resource).

The resources may be a PUCCH resource / uplink shared channel (Physical Uplink Shared Channel (PUSCH)) resource. The UE may adjust the compression rate in consideration of the resource with which no missing of CSI feedback occurs (so as to be able to transmit all the encoded bits).

Information related to which compression rate is used under which condition may be determined, based on a particular rule, or the UE may be notified of this by using physical layer signaling (for example, DCI), higher layer signaling (for example, RRC signaling or a MAC CE), or a particular signal/channel, or a combination of these.

### {Embodiment 5.1}

In Embodiment 5.1, the UE uses a different encoder according to compression rate (similarly to Embodiment 4.1). In this case, the UE is required to be able to select encoders the number of which is equal to or larger than the number of supported compression rates.

The UE may be notified of information related to performance (for example, target accuracy) for each compression rate by using physical layer signaling (for example, DCI), higher layer signaling (for example, RRC signaling or a MAC CE), or a particular signal/channel, or a combination of these.

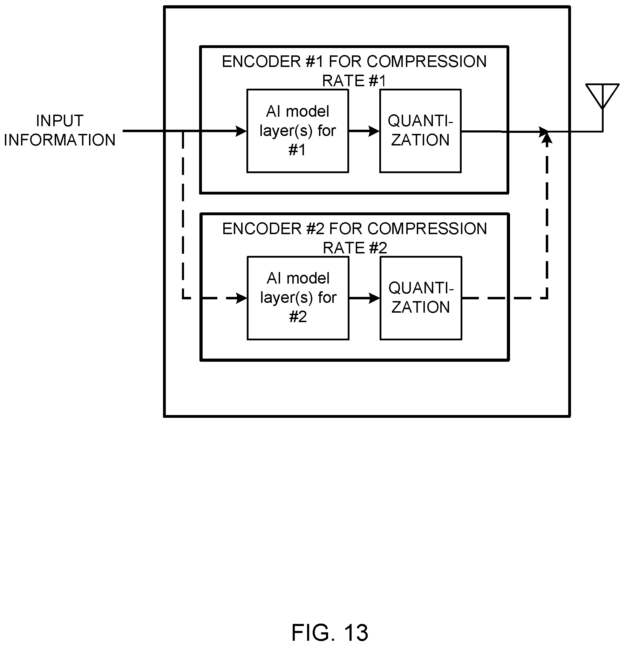

FIG. 13 is a diagram to show an example of control based on compression rates according to Embodiment 5.1. In the present example, two encoders (encoders #1 and #2) are available for the UE. Encoder #1 can achieve compression rate #1, while encoder #2 can achieve compression rate #2. The present example shows a case where the UE determines the use of compression rate #1. In this case, the UE may input input information to encoder #1, perform particular quantization for an encoded value/bit, and transmit information including a bit after the quantization (CSI feedback) from the antenna.

### {Embodiment 5.2}

In Embodiment 5.2, the UE provides an output from a different layer to quantization processing according to compression rate. In Embodiment 5.2, one encoder may be used irrespective of compression rate.

One or more layers may be used for all the compression rates in common. For example, an additional layer(s) may be used (expanded) in order to make a compression rate even smaller (for further compression). With such a configuration, a common layer(s) is provided for some compression rates, which can thereby save storage capacity of the UE.

The UE may be notified of information related to performance (for example, target accuracy) for each compression rate by using physical layer signaling (for example, DCI), higher layer signaling (for example, RRC signaling or a MAC CE), or a particular signal/channel, or a combination of these.

For example, the UE may receive information related to the weight for each compression rate in a loss function. For example, when the total loss function = Σᵢ (weight for compression rate #i x loss for compression rate #i), the UE may receive information related to the weight for each compression rate #i.

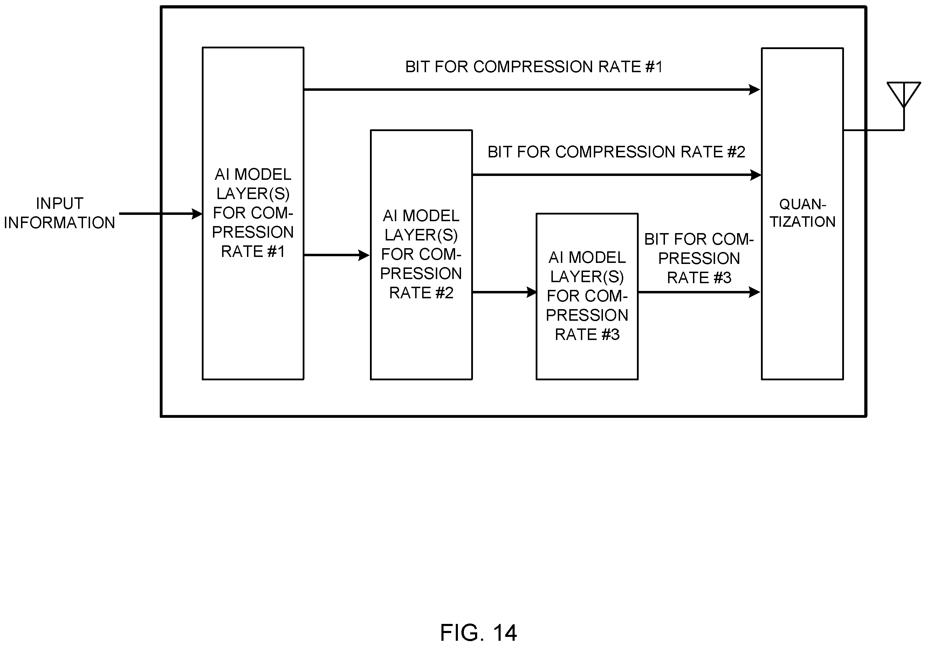

FIG. 14 is a diagram to show an example of control based on compression rates according to Embodiment 5.2. In the present example, the UE includes an encoder supporting three compression rates (compression rates #1, #2, and #3) and including an AI model layers(s) corresponding to each of the compression rates. Note that it is assumed that compression rate #1 > #2 > #3. The UE may generate a bit corresponding to any of the compression rates, perform particular quantization on an encoded value/bit, and transmit information including a bit after the quantization (CSI feedback) from the antenna.

Note that, when the UE determines the use of compression rate #2, for example, the UE inputs an output obtained in response to input of input information to a model for compression rate #1, to a model for compression rate #2. The input to the model for compression rate #2 may include encoded bits for compression rate #1 or may include different information. The UE may perform particular quantization on an output from the model for compression rate #2 and transmit information including a bit after the quantization (CSI feedback) from the antenna. In this case, computation of a model for compression rate #3 may be omitted.

### {Embodiment 5.3}

In Embodiment 5.3, the UE provides part of or all the outputs from all the layers to quantization processing according to compression rate. In Embodiment 5.3, one encoder may be used irrespective of compression rate.

All the layers may be used for all the compression rates in common. For example, part of the outputs from all the layers may be provided to quantization processing in order to make a compression rate even smaller (for further compression). With such a configuration, a common layer(s) is provided for all the compression rates, which can thereby save storage capacity of the UE.

The UE may be notified of information related to performance (for example, target accuracy) for each compression rate by using physical layer signaling (for example, DCI), higher layer signaling (for example, RRC signaling or a MAC CE), or a particular signal/channel, or a combination of these. For example, the UE may receive information related to the weight for each compression rate in a loss function.

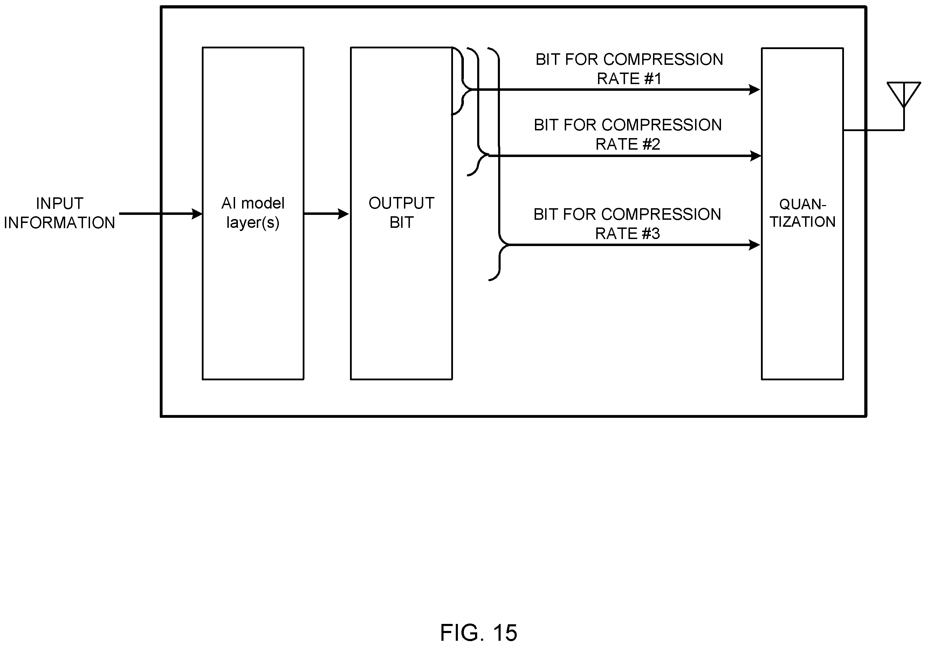

FIG. 15 is a diagram to show an example of control based on compression rates according to Embodiment 5.3. In the present example, the UE includes an encoder supporting three compression rates (compression rates #1, #2, and #3) and including an AI model layers(s) corresponding to all the compression rates in common. Note that it is assumed that compression rate #3 > #2 > #1. The UE may extract an output from a layer according to compression rate, perform particular quantization on an extracted value/bit(s), and transmit information including a bit(s) after the quantization (CSI feedback) from the antenna. For example, the number of bits for compression rate #1 may be X (X > 0), the number of bits for compression rate #2 may be 2X, and the number of bits for compression rate #3 may be 3X.

Note that the UE may determine according to which one of Embodiments 5.1 to 5.3 the UE is to perform control related to compression rate (or whether to perform control based on a plurality of compression rates), based on a particular rule / UE capability, or may be notified of this by using physical layer signaling (for example, DCI), higher layer signaling (for example, RRC signaling or a MAC CE), or a particular signal/channel, or a combination of these.

According to the fifth embodiment described above, supporting of a plurality of compression rates can be appropriately controlled.

### <Sixth Embodiment>

A sixth embodiment relates to the number of CSI instances (which may be referred to as CSI report instances) included in one CSI report.

One CSI instance may include one encoded sequence (which may be referred to as a bit sequence, sequence after quantization processing, an encoded sequence after quantization), and the like. For example, the UE may report a plurality of CSI instances collectively in one CSI report. Each CSI instance may relate to a different layer / subband / compression rate.

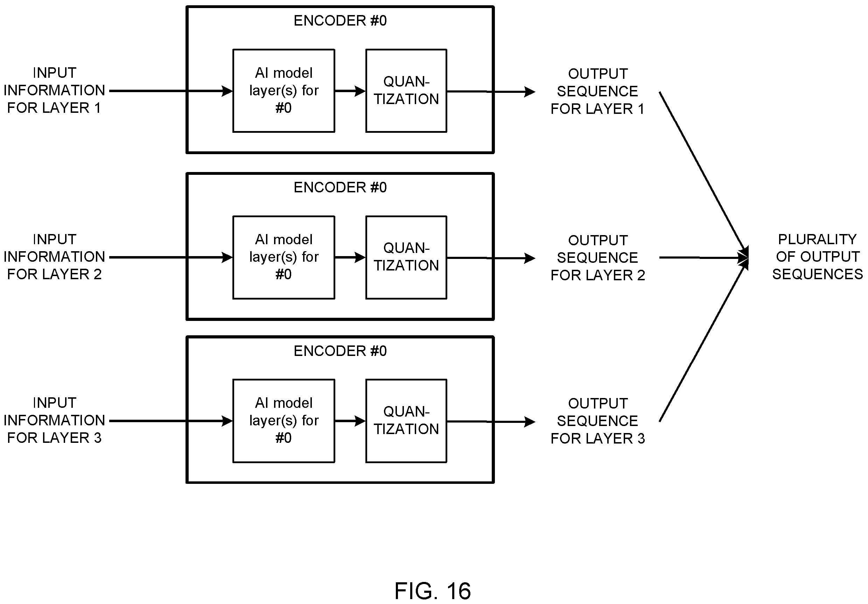

FIG. 16 is a diagram to show an example of report of a plurality of encoded sequences according to the sixth embodiment. In the present example, the UE may input, for each of three layers (layers 1, 2, and 3), input information (for example, a precoding matrix) for the layer to encoder #0, to form one output sequence including a collection of output sequences, and transmit information including the output sequence (CSI feedback) from the antenna.

Note that a plurality of output sequences included in one CSI report (CSI feedback) are assumed to be output based on the same encoder in this example, but this is not restrictive. A plurality of output sequences included in one CSI report (CSI feedback) may be output based on the respective encoders.

According to the sixth embodiment described above, pieces of CSI of a plurality of layers / subbands / compression rates can be reported collectively.

### <Seventh Embodiment>

A seventh embodiment relates to information included in a CSI report (or a CSI instance) and priority of a CSI report.

### {Information Included in CSI Report}

The UE may transmit at least one of the following pieces of information in a CSI report (or CSI part 1/2/X of a CSI report):
- encoded bit sequence after quantization,
- information related to how many encoded bit sequences after quantization are reported,
- information related to a selected encoder,
- information related to a selected DFT base (for example, an DFT index),
- information related to a selected compression rate,
- information related to encoding performance (for example, estimated channel accuracy (for example, GCS between an input to an encoder and an output from a decoder)),
- information related to used quantization processing (for example, information indicating which one of uniform quantization and non-uniform quantization has been used, information indicating a parameter for non-uniform quantization),
- information related to how many CSI instances of different times are included (to be described later), and
- information related to time associated with each CSI instance (to be described later).

These pieces of information may be referred to as information related to CSI feedback, information related to encode (encoding), and the like.

When CSI payload cannot be allocated to a PUSCH resource even by maximizing the coding rate of a PUSCH, the UE may omit part of or all the CSI parts with low priorities according to at least one of the following priority orders:
- CSI part 1 > CSI part 2 > CSI part X,
- CSI part 1 > CSI part X > CSI part 2, and
- CSI part X > CSI part 1 > CSI part 2.

Note that, in any of the priority orders described in the present disclosure, at least one of inequality signs (>) may be interpreted as an inequality sign with an equality sign (≥).

Note that it may be assumed that, when UCI is transmitted by using a PUCCH, a resource block is calculated based on the payload of the UCI, and hence omission of an HARQ-ACK/SR as a result of multiplexing with CSI does not occur.

The UE may assume that CSI part 2 including an encoded bit sequence after quantization does not include information of an existing codebook (CSI part 2 may be thus configured). Here, information of an existing codebook may be information related to at least one of existing codebook such as type I/II codebooks and enhanced type II codebook, for example.

Note that the UE may assume that CSI part 2 including an encoded bit sequence after quantization includes information of an existing codebook (CSI part 2 may be thus configured).

### {Omission of Encoded Bit Sequence After Quantization and the like}

The UE may omit part of at least one of an encoded bit sequence after quantization output from an encoder and some pieces of additional information (for example, information related to a selected DFT base), based on a priority rule.

The UE may perform the above-described omission for each level (on a per level basis). For example, bit sequences / pieces of additional information may be accommodated from the one with the highest priority (note that a smaller priority value may indicate higher priority), within a range that modulation symbols allocated for a CSI report can accommodate the bit sequences / pieces of additional information (until the upper limit of the accommodation).

The priority rule may be determined based on at least one of the following:
- type of information (whether the information is encoded bit sequence after quantization, information of a selected encoder, information of a selected DFT base, information of a selected compression rate, information of expected performance, or the like),
- layer (Multi Input Multi Output (MIMO) layer),
- time instance,
- subband index,
- whether wideband CSI or subband CSI,
- behavior of the time domain for a CSI report,
- cell ID, and
- report configuration ID (reportConfigID).

Regarding the type of information, the priority order that information of a selected encoder > information of a selected compression rate > information of a selected DFT base > information of expected performance may be used, for example.

Regarding the layer, the priority order that information for a layer indicated by a layer indicator (LI) > information for a different layer may be used, for example. Alternatively, regarding the layer, the priority order that information common to all or a plurality of layers > information specific to a particular (one or more) layer may be used.

Regarding the time instance, the priority order that more recent CSI information is given higher priority may be used, for example.

Regarding the subband index, the priority order that information related to an even-numbered subband index > information related to an odd-numbered subband index may be used, for example.

Regarding whether wideband CSI or subband CSI above, the priority order that information related to subband CSI > information related to wideband CSI may be used, for example.

Regarding the behavior of the time domain for a CSI report, the priority order that aperiodic CSI report > semi-persistent CSI report on PUSCH > semi-persistent CSI report on PUCCH > periodic CSI report may be used, for example.

Note that the priority rule may be used for omission of at least one of a plurality of CSI reports or may be used for omission of information included in CSI part 1/2/X.

According to the seventh embodiment described above, information to be included in a CSI report can be appropriately controlled.

### <Eighth Embodiment>

An eighth embodiment relates to joint CSI encoding in the time domain.

A model of the present disclosure may employ a recurrent neural network (RNN) for consideration of time correlation for CSI. For example, an RNN using long short-term memory (LSTM) is expected to preferably deal with processing based on time series data. Note that time correlation for CSI may be considered even in a case of not employing an RNN (for example, autoencoder).

The UE may encode and report a plurality of CSI instances collectively. The plurality of CSI instances may each include input information calculated in a different time instance (described above in the second embodiment). According to this configuration, further improvement in compression by using time correlation can be expected, and also the base station can acquire a channel matrix / precoding matrix in a plurality of time instances that can be used for prediction.

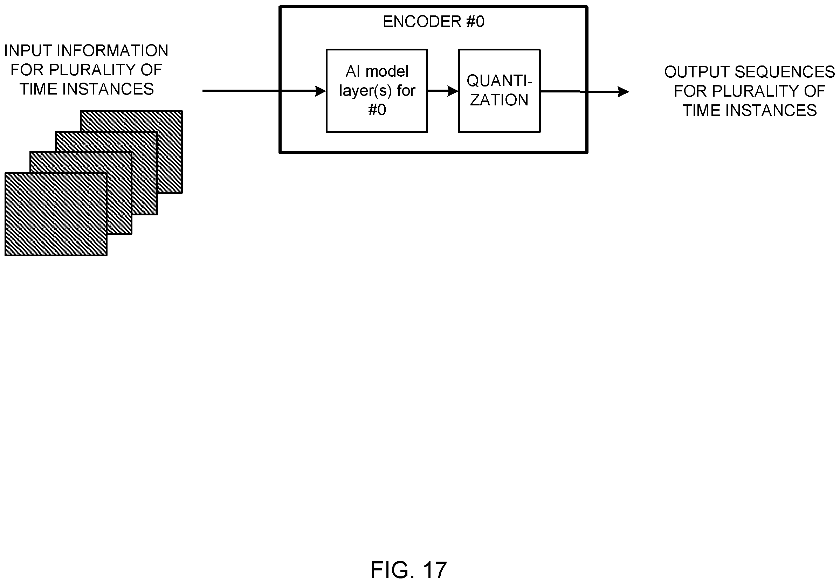

FIG. 17 is a diagram to show an example of report of a plurality of encoded sequences according to the eighth embodiment. In the present example, the UE inputs pieces of input information for a plurality of time instances (for example, precoding matrices) to encoder #0 to thereby be able to obtain an output sequence for all the plurality of time instances. The UE may transmit information including the output sequence (CSI feedback) from the antenna.

There is an issue of a case where a plurality of time instances are reported at the same timing as described above. In existing NR specifications, it is defined to control derivation of channel measurement for calculation of CSI, based on a CSI reference resource for an uplink slot in which CSI report is performed. A Time resource of the CSI reference resource may correspond to a particular downlink slot with reference to downlink slot n corresponding to uplink slot n' in which the CSI report is performed.

For example, in an existing NR specification, it is defined to, when a higher layer parameter related to time restriction for measurement (for example, timeRestrictionForChannelMeasurements related to time restriction for channel measurement, timeRestrictionForInterferenceMeasurements for interference measurement, or the like) is configured (this may mean that a configuration value of the parameter is "configured"), derive channel measurement for calculation of CSI to report, based on the most recent NZP CSI-RS occasion related to a CSI report configuration, the occasion being not later than the CSI reference resource. Note that the channel measurement in the present disclosure may be interpreted as interference measurement, and vice versa.

In an existing NR specification, it is defined to, when the higher layer parameter related to time restriction for measurement is not configured (this may mean that a configuration value of the parameter is "notConfigured"), derive channel measurement for calculation of CSI to report, based on an NZP CSI-RS occasion related to a CSI report configuration, the occasion being not later than the CSI reference resource.

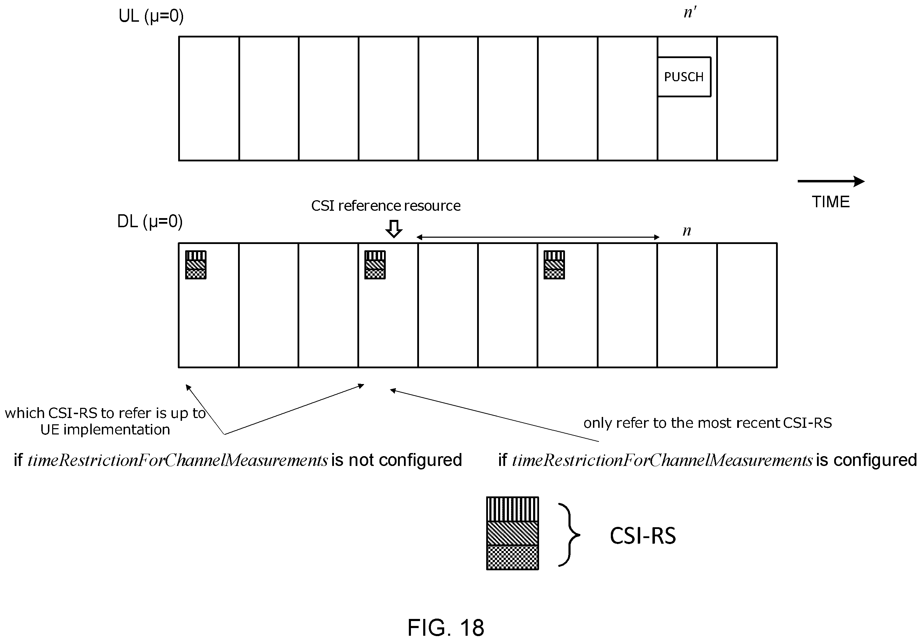

FIG. 18 is a diagram to show an example of determination of a CSI-RS for calculation of CSI based on a CSI reference resource in an existing NR specification. Note that, for simplicity, description will be given by assuming that subcarrier spacing (SCS) configuration µ = 0 in DL and UL, but it is apparent for a person skilled in the art that this is not restrictive. In the present example, when the parameter related to time restriction for measurement is configured, CSI is determined by only referring to the most recent NZP CSI-RS occasion not later than the CSI reference resource. However, when the parameter is not configured, which NZP CSI-RS not later than the CSI reference resource to refer to for determination of CSI is up to UE implementation.

As understood from these, in an existing NR specification, when pieces of CSI of a plurality of time instances are reported in the same uplink slot, it is not clear to use which NZP CSI-RS for a measurement result based on which input information of an encoder is calculated. Embodiment 8.1 and 8.2 provide methods to solve the issue.

Note that control according to the eighth embodiment may also be used when no encoder is used. In this case, the UE may report a plurality of CSI instances or CSI reports for a plurality of time instances (for example, the above-described existing pieces of CSI (L1-RSRP, L1-SINR, or the like)) in the same slot (for example, by one piece of UCI or one CSI feedback).

### {Embodiment 8.1}

The plurality of CSI instances may be calculated based on channel measurement derived based on X (X > 1) most recent NZP CSI-RSs not later than the CSI reference resource.

The UE may determine the X, based on a particular rule / UE capability, or may be notified of this by using physical layer signaling (for example, DCI), higher layer signaling (for example, RRC signaling or a MAC CE), or a particular signal/channel, or a combination of these.

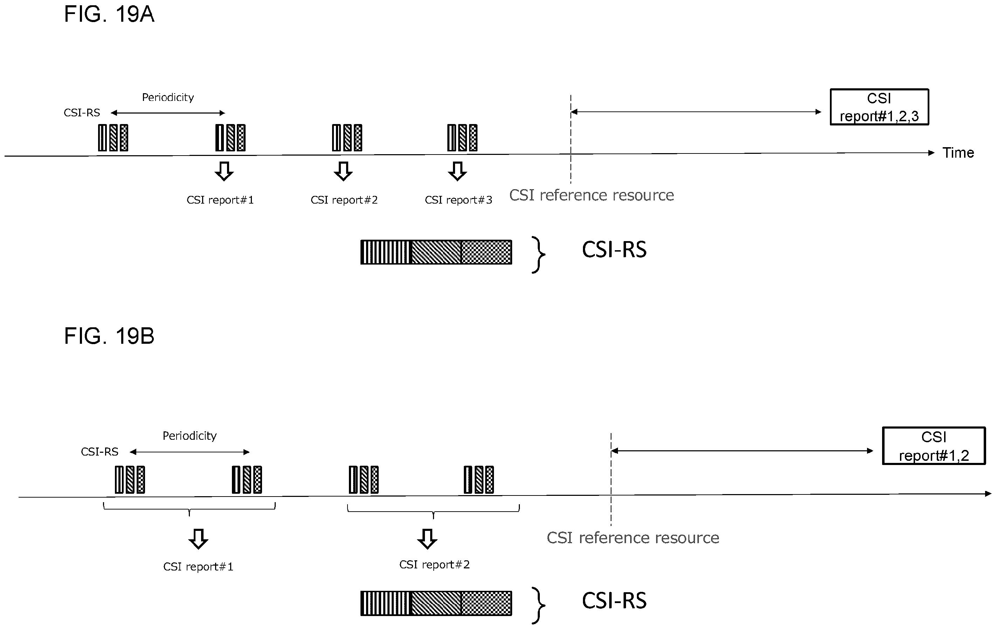

FIG. 19A is a diagram to show an example of calculation of CSI instances according to Embodiment 8.1. In the present example, the UE encodes and reports CSI reports #1 to #3 collectively in the same uplink slot. FIG. 19A shows a CSI reference resource with reference to this slot. In the present example, it is assumed that a plurality of CSI instances are calculated based on X (X = 3) most recent NZP CSI-RSs not later than the CSI reference resource.

### {Embodiment 8.2}

The plurality of CSI instances may be calculated based on channel measurement derived based on an X (X > 1) most recent set of NZP CSI-RSs not later than the CSI reference resource. Here, each set may include a Y (Y > 0 or Y > 1) NZP CSI-RS(s). One CSI instance may be calculated based on one set.

The UE may determine the X and the Y, based on a particular rule / UE capability, or may be notified of this by using physical layer signaling (for example, DCI), higher layer signaling (for example, RRC signaling or a MAC CE), or a particular signal/channel, or a combination of these.

FIG. 19B is a diagram to show an example of calculation of CSI instances according to Embodiment 8.2. In the present example, the UE encodes and reports CSI reports #1 to #2 collectively in the same uplink slot. FIG. 19B shows a CSI reference resource with reference to this slot. In the present example, it is assumed that a plurality of CSI instances are calculated based on X (X = 2) most recent NZP CSI-RS sets (each set including Y (Y = 2) NZP CSI-RSs) not later than the CSI reference resource.

Embodiment 8.1 and 8.2 may be applied in a case where a higher layer parameter related to time restriction for measurement is configured for the UE by RRC signaling or may be applied in other cases.

Note that the UE may determine according to which one of Embodiments 8.1 and 8.2 the UE is to calculate a plurality of CSI instances (or whether to joint-feedback a plurality of CSI instances), based on a particular rule / UE capability, or may be notified of this by using physical layer signaling (for example, DCI), higher layer signaling (for example, RRC signaling or a MAC CE), or a particular signal/channel, or a combination of these.

According to the eighth embodiment described above, CSI feedback of CSI instances for a plurality of times can be appropriately performed.

### <Supplement>

At least one of the above-described embodiments may be applied only to a UE that has reported particular UE capability or that supports the particular UE capability.

The particular UE capability may indicate at least one of the following:
- whether to support particular operation/information (for example, selection of quantization/encoder / compression of a plurality of rates / CSI omission / joint encode for the time domain, for AI-aided CSI feedback) of the embodiments and
- supported maximum X/Y value (X and Y are described in the eighth embodiment above).

The UE capability may be reported for each frequency, reported for each frequency range (for example, Frequency Range 1 (FR1), Frequency Range 2 (FR2), FR2-1, FR2-2), reported for each cell, or reported for each subcarrier spacing (SCS) .

The US capability may be reported for time division duplex (TDD) and frequency division duplex (FDD) in common or independently.

At least one of the above-described embodiments may be applied when the UE is configured with particular information related to the above-described embodiment(s) by higher layer signaling. For example, the particular information may be information indicating that the use of an AI model is enabled for CSI feedback, any RRC parameter for a particular resource (for example, Rel. 18), or the like.

Note that at least one of the above-described embodiments may be used (for compression) for transmission of information between a UE and a base station other than CSI feedback. For example, the UE may report information related to position (or positioning) / information related to position estimation in the location management function (LMF) to the network according to at least one of the above-described embodiments (for example, by generating the information by using an encoder). The information may be information of a channel impulse response (CIR) for each subband / each antenna port. With report of this information, the base station can estimate the position of the UE without report of the angle/time difference of received signals.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

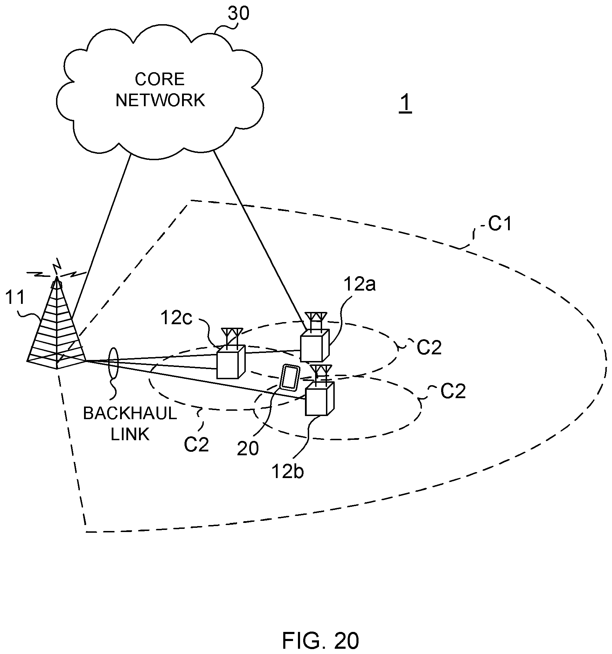

FIG. 20 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

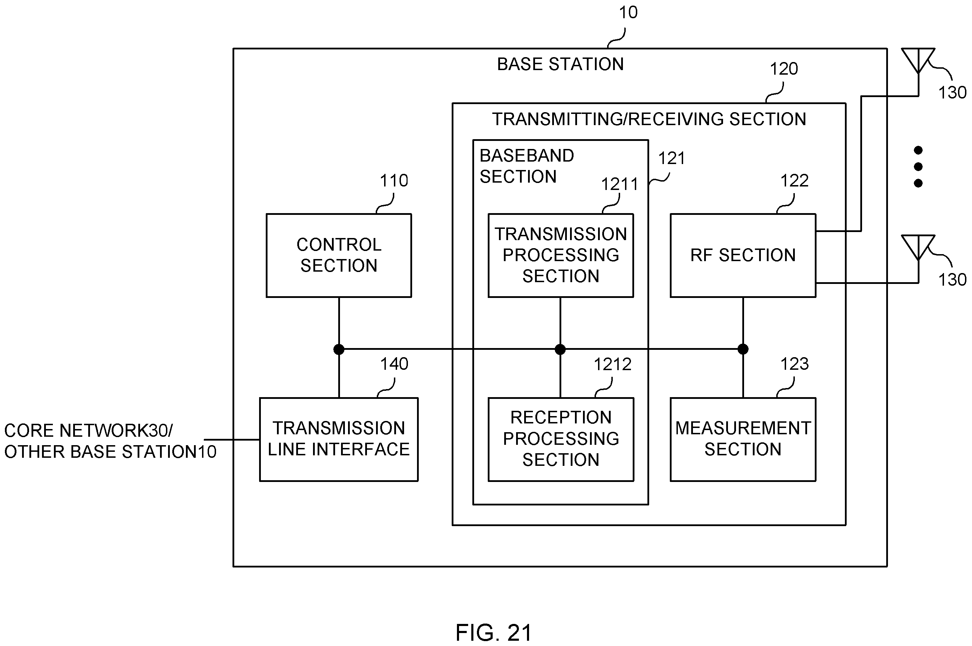

FIG. 21 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may receive a channel state information (CSI) report.

The control section 110 may input the bit included in the CSI report to a decoder to acquire information related to at least part of a particular matrix.

The control section 110 may input the bit included in the CSI report to the decoder selected from among a plurality of decoders to acquire information related to at least part of a particular matrix.

The control section 110 may input the bit included in the CSI report to the decoder to acquire information related to at least part of a particular matrix. The CSI report may include a plurality of the bits output based on pieces of input information corresponding to different pieces of the information.

### (User Terminal)

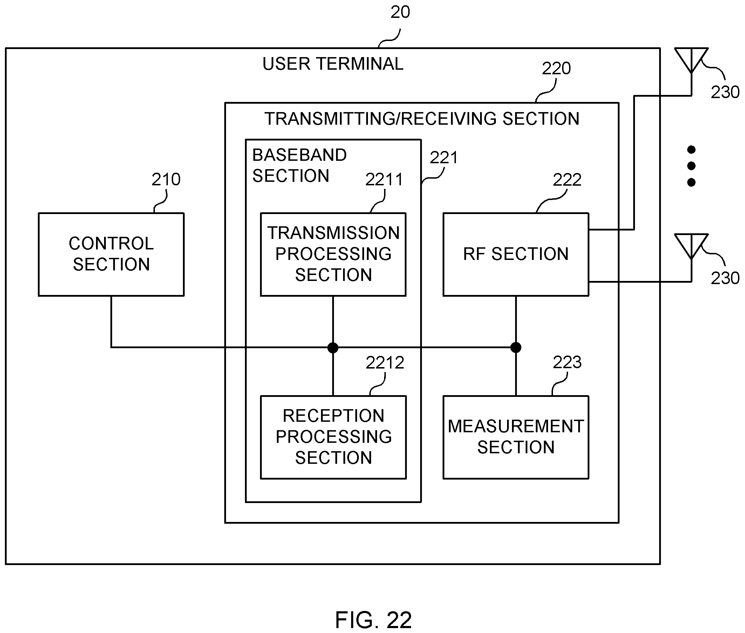

FIG. 22 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the control section 210 may derive a channel state information (CSI) report, based on a bit output in response to input of input information related to at least part of a particular matrix (for example, a channel matrix / precoding matrix) to an encoder.

The transmitting/receiving section 220 may transmit the CSI report.

The input information may include information of a vector (DFT base) extracted from at least one of a channel matrix and a precoding matrix.

The CSI report may include information related to the number of the vector.

The control section 210 may perform quantization on a value obtained through encoding by the encoder, to generate the bit output.

The control section 210 may derive a channel state information (CSI) report, based on a bit output in response to input of input information related to at least part of a particular matrix (for example, a channel matrix / precoding matrix) to an encoder selected from a plurality of encoders.

The transmitting/receiving section 220 may transmit the CSI report.

The control section 210 may select the encoder from among the plurality of encoders, based on target performance.

When the target performance is not achievable even by using any of the plurality of encoders, the control section 210 may transmit a CSI report including a precoding matrix indicator (PMI).

The control section 210 may control the size of the bit to output, based on a compression rate.

The control section 210 may derive a channel state information (CSI) report, based on a bit output in response to input of input information related to at least part of a particular matrix (for example, a channel matrix / precoding matrix) to an encoder. The control section 210 may include a plurality of the bits output based on different pieces of input information.

The transmitting/receiving section 220 may transmit the CSI report.

The control section 210 may perform such control as to omit transmission of part of information related to encoding, based on a priority rule.

The control section 210 may include a plurality of the bits output based on pieces of input information corresponding to different time instances, in the CSI report.

When a higher layer parameter related to time restriction for measurement is configured, the control section 210 may calculate pieces of input information corresponding to the different time instances, based on channel measurement derived based on more than one most recent non-zero power (Non Zero Power (NZP)) CSI reference signal not later than a CSI reference resource.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

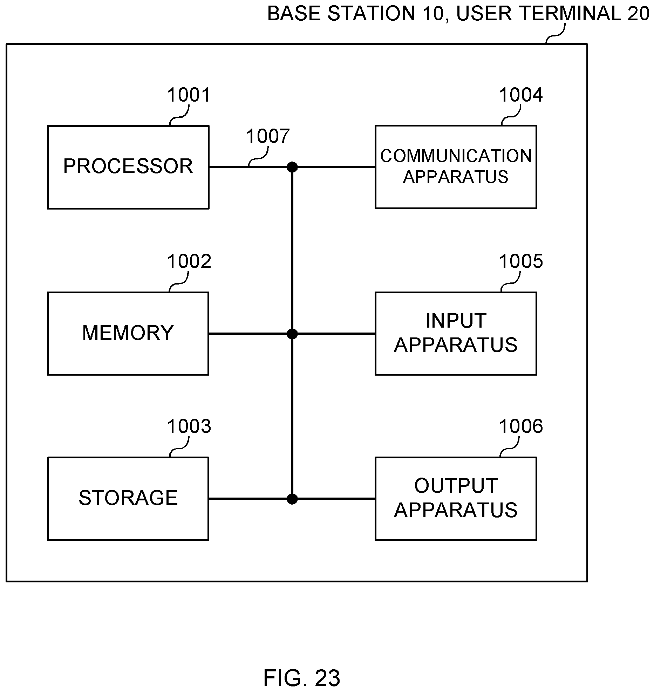

For example, a base station, a user terminal, and so on according to one embodiment of the present disclosure may function as a computer that executes the processes of the radio communication method of the present disclosure. FIG. 23 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object refers to a mobile object, of which moving speed is any speed, and also includes, as a matter of course, a case in which the moving object is stationary. For example, the moving object includes, but is not limited to, a vehicle, a transport vehicle, an automobile, a motorcycle, a bicycle, a connected car, an excavator, a bulldozer, a wheel loader, a dump truck, a forklift, a train, a bus, a handcart, a rickshaw, a ship and other watercraft, an airplane, a rocket, an artificial satellite, a drone, a multicopter, a quadcopter, a hot air balloon, and an object loaded on these. The moving object may be a moving object that autonomously moves based on an operation command.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

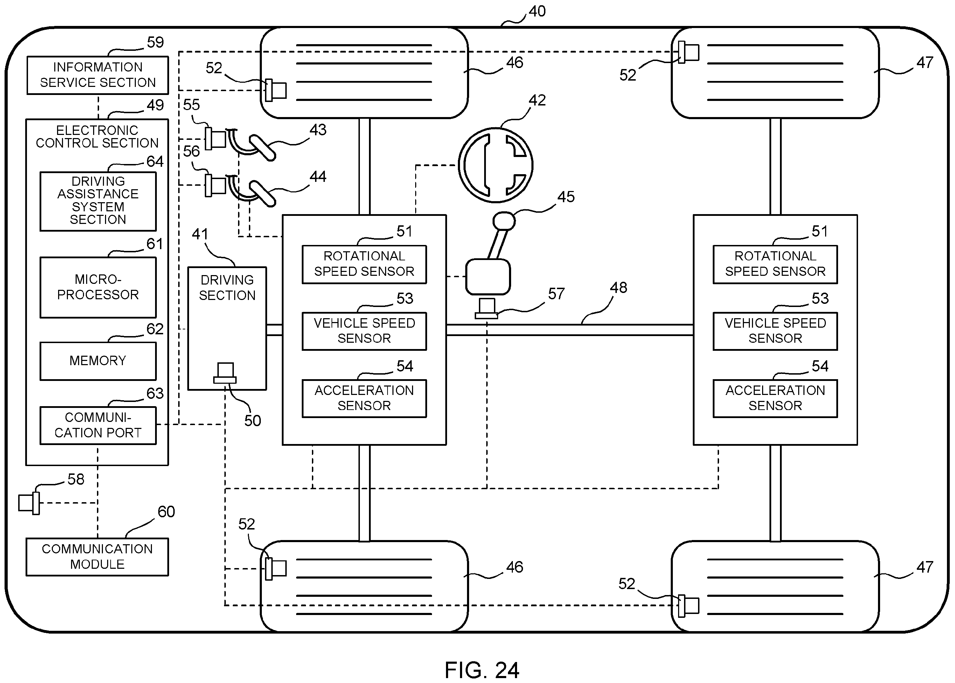

FIG. 24 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, am input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV)) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that derives a channel state information (CSI) report, based on a bit output in response to input of input information related to at least part of a particular matrix to an encoder selected from among a plurality of encoders; and
a transmitting section that transmits the CSI report.

2. The terminal according to claim 1, wherein
the control section selects the encoder from among the plurality of encoders, based on target performance.

3. The terminal according to claim 2, wherein
when the target performance is not achievable even by using any of the plurality of encoders, the control section transmits a CSI report including a precoding matrix indicator (PMI).

4. The terminal according to any of claims 1 to 3, wherein
the control section controls size of the bit to output, based on a compression rate.

5. A radio communication method for a terminal, the radio communication method comprising:
deriving a channel state information (CSI) report, based on a bit output in response to input of input information related to at least part of a particular matrix to an encoder selected from among a plurality of encoders; and
transmitting the CSI report.

6. A base station comprising:
a receiving section that receives a channel state information (CSI) report; and
a control section that inputs a bit included in the CSI report to a decoder selected from among a plurality of decoders, to acquire information related to at least part of a particular matrix.
